# FASCICULE DE BREVET EUROPEEN

(11) **EP 2 212 919 B1**
(45) Date de publication et mention de la délivrance du brevet: **21.08.2019**
(21) Numéro de dépôt: 08805260.0
(22) Date de dépôt: 13.10.2008
(51) Int. Cl.: H01L 31/042

(54) **PERFECTIONNEMENTS APPORTÉS À DES ÉLÉMENTS CAPABLES DE COLLECTER DE LA LUMIÈRE**
VERBESSERUNGEN AN LICHTSAMMELELEMENTEN
IMPROVEMENTS TO LIGHT-COLLECTING ELEMENTS

(30) Priorité: 16.10.2007 FR 0758350; 03.04.2008 FR 0852216
(43) Date de publication de la demande: 04.08.2010
(73) Titulaire: (CNBM) Bengbu Design & Research Institute for Glass Industry Co., Ltd., Bengbu (CN)
(72) Inventeur: KUSTER, Hans-Werner, 52066 Aachen (DE); KARG, Franz, 80689 München (DE); STETTER, Walter, 89257 Illertissen (DE); GASS, Robert, 52134 Herzogenrath (DE); BAUMBACH, Jörg, 81669 München (DE)
(74) Mandataire: Gebauer, Dieter Edmund
(86) Numéro de dépôt international: PCT/EP2008/063744
(87) Numéro de publication internationale: WO 2009/050144

(56) Documents cités:
- EP-A- 1 601 022
- WO-A-2006/132265
- DE-A1- 4 014 200
- DE-A1-102004 009 935
- DE-A1-102004 055 187
- DE-A1-102005 057 468
- FR-A- 2 581 603
- JP-A- 8 181 345
- JP-A- 2004 324 233
- JP-A- 2006 278 738
- US-A- 5 143 556
- US-A1- 2003 034 029
- US-A1- 2003 154 667
- US-A1- 2004 140 002
- US-A1- 2006 086 382

## Description

La présente invention est relative à des perfectionnements apportés à des éléments capables de collecter de la lumière.

Il est connu que des éléments capables de collecter de la lumière du type cellules solaires photovoltaïques comportent un agent absorbant, et deux électrodes électriquement sur n'importe quelle face. L'ensemble est encapsulé entre deux substrats dont l'un étant un substrat de protection à fonction verrière afin de permettre le passage de la lumière et l'autre un substrat support et donc n'est pas nécessairement transparent. Ces électrodes se caractérisent essentiellement par une résistance électrique de surface aussi faible que possible et une bonne adhérence à la couche d'absorbeur ainsi que le cas échéant au substrat. Les électrodes sont la plupart du temps fabriquées en métal ou à partir d'un oxyde métallique, par exemple à base de molybdène, d'argent, d'aluminium, de cuivre, d'oxyde de zinc dopé, ou d'oxyde d'étain.

Ces éléments capables de la lumière sont assemblés sous la forme d'un vitrage feuilleté qui est emprisonné dans un châssis ou une superstructure métallique devant apporter au vitrage à la fois sa rigidité mécanique et permettre son association avec d'autres vitrages analogues, en vue de l'obtention de surface active de plus grande dimension.

Généralement le châssis métallique est réalisé à partir de profilés de section droite en U, les branches du U emprisonnant une portion de surface située en périphérie de chacun des substrats. Ces zones de recouvrement nécessaires à l'assemblage mécanique sont en fait des parties masquées de surface active et constituent des surfaces qui ne peuvent être utilisées pour convertir de la lumière en énergie électrique, diminuant d'autant la surface réelle active. Or, les fabricants certifient leur module en fonction d'une puissance électrique obtenue par unité de surface. Or, on comprend aisément que les fabricants recherchent constamment à ce que l'unité de surface active soit la plus proche possible de la surface réelle du panneau.

Un deuxième problème lié au mode d'assemblage par châssis métallique a été identifié. Il est relatif à l'échauffement des modules. En effet, lorsque des modules sont assemblés entre eux bord à bord au niveau de leur partie métallique en regard afin de conformer des surfaces de conversion de forte puissance, il a été constaté que la température des modules augmentait compte tenu du réchauffage par le soleil, les parties verticales de la superstructure étant néfastes à l'établissement d'un courant d'air de convection nécessaire au refroidissement. En effet, il est connu que le rendement d'un module solaire ou photovoltaïque est inversement proportionnel à la température desdits modules.

Ce problème d'insuffisance de mouvement de convection ne peut être solutionné par les châssis de l'art antérieur, ils ont atteint leur limite. En effet, il conviendrait que l'assemblage des modules soit assemblé à un support en prenant soin de laisser entre 2 modules un espace permettant le passage d'un courant d'air de convection. Or en procédant ainsi, cela revient à augmenter encore la surface utilisée par rapport à la surface réellement active utile à la conversion énergétique.

La présente invention vise donc à pallier les inconvénients en proposant une technique d'assemblage des modules qui maximise le ratio surface du module par rapport à la surface active du panneau.

A cet effet, la présente invention propose un module solaire selon la revendication 1.

Dans des modes de réalisation préférés de l'invention, on peut éventuellement avoir recours en outre à l'une et/ou à l'autre des dispositions suivantes :
- l'élément est sensiblement de forme polygonale, notamment rectangulaire,
- l'élément comporte sur sa face inférieure aux moins 2 profilés orientés parallèlement aux côtés situés verticalement, lorsque l'élément est assemblé à une superstructure.
- il comporte un dispositif de verrouillage et de déverrouillage desdits éléments à une structure porteuse,
- le dispositif de verrouillage comporte un trou de serrure,
- les profilés sont assemblés par collage à une portion de surface du substrat support.
- l'une des zones de contact comporte un dispositif de sécurité.
- l'une des zones de contact comporte un talon avec une bride et un organe de serrage solidaire de la superstructure

Selon un autre aspect de l'invention, elle vise également une table adaptée pour être solidarisée à une structure porteuse comprenant une pluralité d'éléments juxtaposés tels que précédemment décrits.

Selon une caractéristique préférentielle, la table possède un gabarit compatible avec un moyen de transport de type « Inloader ».

D'autres caractéristiques, détails, avantages de la présente invention apparaîtront mieux à la lecture de la description qui va suivre, faite à titre illustratif et nullement limitatif, en référence à des figures annexées sur lesquelles :
- Les figures 1a et 1b est une vue en perspective d'un élément capable de collecter de la lumière,
- Les figures 2 et 3 sont des vues schématiques d'un élément capable de collecter de la lumière
- la figure 4 est une vue en perspective d'une structure porteuse supportant des tables, chacune de ces tables comportant une juxtaposition d'éléments selon les figures la et 1b,
- les figures 5 et 6 sont des vues à grande échelle et en perspective du système de solidarisation permettant l'accrochage mécanique entre un module et la charpente.
- La figure 7 illustre un second mode de verrouillage, en forme de trou de serrure.
- La figure 8 est une vue de dessous et en perspective d'une structure porteuse supportant un élément capable de collecter de la lumière,
- La figure 9 est une vue en perspective d'une structure porteuse représentée sans la table
- La figure 10 est une vue de détail et en perspective de la structure porteuse.

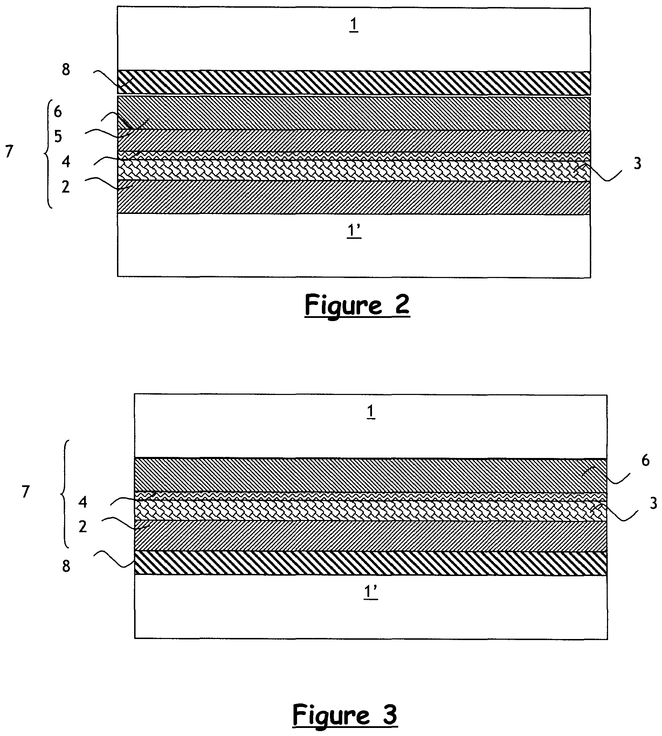

Sur la figure la, on a représenté un élément capable de collecter de la lumière (une cellule solaire ou photovoltaïque). Schématiquement, deux substrats 1 et 1', dont l'un au moins est nécessairement transparent pour laisser passer la lumière, emprisonnent un empilement de couches 7, comportant entre des couches électroconductrices 2, 6 formant électrodes, une couche fonctionnelle 3 à base d'agent absorbant permettant la conversion énergétique de la lumière en énergie électrique. Ces empilements sont visibles en figures 2 et 3.

Le substrat 1 formant couvercle est transparent et peut par exemple être entièrement en verre. Il peut également être en un polymère thermoplastique tel qu'un polyuréthane ou un polycarbonate ou un polyméthacrylate de méthyle.

L'essentiel de la masse (c'est-à-dire pour au moins 98 % en masse), voire la totalité du substrat à fonction verrière est constituée de matériau(x) présentant la meilleure transparence possible et ayant de préférence une absorption linéique inférieure à 0,01 mm⁻¹ dans la partie du spectre utile à l'application (module solaire), généralement le spectre allant de 380 à 1200 nm.

Le substrat 1 formant couvercle selon l'invention peut avoir une épaisseur totale allant de 0,5 à 10 mm lorsqu'on l'utilise comme plaque protectrice d'une cellule photovoltaïque de diverses technologies (CIS, silicium amorphe, silicium micro cristallin, silicium cristallin). Dans ce cas, il peut être avantageux de faire subir à cette plaque un traitement thermique (du type trempe par exemple) lorsqu'il est en verre.

La technologie CIS rassemble des composés ternaires chalcopyrites qui jouent le rôle d'agents absorbeurs, ces derniers contiennent généralement du cuivre, de l'indium et du sélénium. Il s'agit là de ce que l'on appelle des couches d'agent absorbant CISe₂. On peut aussi ajouter à la couche d'agent absorbant du gallium (ex : Cu(In,Ga)Se₂ ou CuGaSe₂), de l'aluminium (ex : Cu(In,Al)Se₂), ou du soufre (ex : CuIn(Se,S). On les désigne en général et ci-après par le terme de couches d'agent absorbant à chalcopyrite.

Une autre famille d'agent absorbant, en couche mince, est soit à base de silicium, ce dernier pouvant être amorphe ou microcristallin, soit à base de tellure de cadmium (CdTe). Il existe également une autre famille d'agent absorbant à base de silicium polycristallin, déposé en couche épaisse, avec une épaisseur comprise entre 50 µm à 250 µm, au contraire de la filière silicium amorphe ou microcristallin, qui est déposé en couche mince.

Le substrat 1' formant plaque support diffère du substrat 1 par le fait qu'il n'est pas nécessairement transparent, et donc pas nécessairement à fonction verrière.

En référence à la figure 2, sur l'une des faces principales du substrat 1', on dépose une première couche conductrice 2 devant servir d'électrode. Sur cette électrode 2 est déposée la couche fonctionnelle 3 à base d'agent absorbant à chalcopyrite. Lorsqu'il s'agit d'une couche fonctionnelle à base par exemple de CIS, CIGS, ou CIGSe₂ il est préférable que l'interface entre la couche fonctionnelle 3 et l'électrode 2 soit à base de molybdène. Une couche conductrice répondant à ces exigences est décrite dans la demande de brevet européen EP1356528.

La couche d'agent absorbant à chalcopyrite 3 est revêtue d'une fine couche 4 dite tampon en sulfure de cadmium (CdS), en sulfure de zinc (ZnS), ou en sulfure d'indium (IS) permettant de créer avec la couche à chalcopyrite une jonction pn. En effet, l'agent à chalcopyrite est généralement dopé p, la couche tampon, notamment en CdS, étant dopée n, cela permet de créer la jonction pn nécessaire à l'établissement d'un courant électrique.

Cette fine couche tampon 4 par exemple en CdS est elle-même recouverte d'une couche d'accrochage 5 généralement formée d'oxyde de zinc non dopée (ZnO).

Afin de former la seconde électrode 6, la couche de ZnO 5 est recouverte d'une couche en TCO pour « Transparent Conductive Oxide ». Elle peut être choisie parmi les matériaux suivants : oxyde d'étain dopé, notamment en bore, ou en aluminium. Dans le cas de l'oxyde de zinc dopé, notamment à l'aluminium, les précurseurs utilisables, en cas de dépôt par CVD, peuvent être des organo-métalliques ou halogénures de zinc et d'aluminium. L'électrode en TCO, par exemple en ZnO peut être aussi déposée par pulvérisation à partir de cible métallique ou céramique.

Par ailleurs, cette couche conductrice doit être aussi transparente que possible, et présenter une transmission élevée de la lumière dans l'ensemble des longueurs d'onde correspondant au spectre d'absorption du matériau constituant la couche fonctionnelle, afin de ne pas réduire inutilement le rendement du module solaire.

L'une ou l'autre des couches conductrices 2, 6 présente résistance par carré d'au plus 30 ohms/carré, notamment d'au plus 20 ohms/carré, de préférence d'au plus 10 ou 15 ohms/carré. Elle est généralement comprise entre 5 et 12 ohms/carré.

L'empilement 7 de couches minces est emprisonné entre les deux substrats formant couvercle 1 et support 1' par l'intermédiaire d'un intercalaire de feuilletage 8 par exemple en PU, PVB ou EVA. Le substrat 1 se distingue du substrat 1' par le fait qu'il est à fonction verrière, comme un verre silico-sodo-calcique de manière à conformer une cellule solaire ou photovoltaïque puis encapsulé périphériquement à l'aide d'un joint ou d'une résine d'étanchéité. Un exemple de composition de cette résine et de ses modalités de mise en oeuvre est décrit dans la demande EP739042.

Si on utilise un agent absorbant de la filière silicium en couche mince, à savoir du silicium amorphe, ou du silicium micro cristallin, ou un agent absorbant à base de tellure de cadmium (CdTe) en couche mince, la construction de l'élément capable de collecter de la lumière est réalisée en sens inverse de celui utilisé pour la filière à chalcopyrite. On parle alors de construction dite à « superstrate » par opposition à la construction dite à « strate ». On pourra se reporter à la figure 3.

La différence essentielle réside dans le fait que l'empilement de couches minces est construit à partir du substrat 1 formant couvercle. La face B (la face principale interne) du substrat 1 est revêtue d'une première couche conductrice 6 devant servir d'électrode. Sur cette électrode est déposée la couche fonctionnelle à base d'agent absorbant en silicium amorphe ou microcristallin ou en tellure de cadmium.

Afin de former la première électrode 6, la couche est à base d'une couche en TCO pour « Transparent Conductive Oxide » .Elle peut être choisie parmi les matériaux suivants : oxyde d'étain dopé, notamment en bore, ou en aluminium. Dans le cas de l'oxyde de zinc dopé, notamment à l'aluminium, les précurseurs utilisables, en cas de dépôt par CVD, peuvent être des organo-métalliques ou halogénures de zinc et d'aluminium. L'électrode en TCO, par exemple en ZnO peut être aussi déposée par pulvérisation à partir de cible métallique ou céramique.

Cette couche conductrice doit être aussi transparente que possible, et présenter une transmission élevée de la lumière dans l'ensemble des longueurs d'onde correspondant au spectre d'absorption du matériau constituant la couche fonctionnelle, afin de ne pas réduire inutilement le rendement du module solaire.

Cette couche 6 de TCO, à base par exemple de SnO2 : F ou de ZnO :A1 est éventuellement recouverte d'une couche 5 additionnelle relativement mince (par exemple 100 nm) en ZnO non dopée. Cette couche mince de ZnO est ensuite recouverte de la couche fonctionnelle 3 à base de silicium ou de tellure de cadmium en couche mince. Le reste de l'empilement 7 est constitué d'une deuxième couche conductrice 2 servant d'électrode en matériau métallique ou d'oxyde métallique. Classiquement cette couche conductrice est à base d'ITO (oxyde d'indium et d'étain) ou en métal (cuivre, aluminium)
L'une ou l'autre des couches conductrices 2, 6 présente résistance par carré d'au plus 30 ohms/carré, notamment d'au plus 20 ohms/carré, de préférence d'au plus 10 ou 15 ohms/carré. Elle est généralement comprise entre 5 et 12 ohms/carré.

L'empilement de couches minces est emprisonné entre les deux substrats 1 et 1' par l'intermédiaire d'un intercalaire de feuilletage 8 par exemple en PU, PVB ou EVA. Le substrat 1' se distingue du substrat 1 par le fait qu'il n'est pas nécessairement en verre et n'est pas forcément transparent. Il joue un rôle de support et est encapsulé avec l'autre substrat 1 périphériquement à l'aide d'un joint ou d'une résine d'étanchéité. Un exemple de composition de cette résine et de ses modalités de mise en oeuvre est décrit dans la demande EP739042.

Une troisième configuration consiste en à la réalisation d'élément (modules solaires) dont l'agent absorbant est à base silicium cristallin. Les wafers de silicium sont alors assemblés par l'intermédiaire d'un intercalaire de feuilletage en EVA, PU, ou PVB entre les deux substrats 1,1' formant respectivement le couvercle et le support de l'élément. Les couches électroconductrices 2, 6 formant les électrodes, en couches ou en grilles, sont déposées sur chacun des substrats et sont obtenues par une technique de sérigraphie de composés métalliques.

Un module solaire tel que précédemment décrit, doit, pour pouvoir fonctionner et délivrer une tension électrique à un réseau de distribution électrique, être pourvu de moyens de support et de solidarisation assurant son orientation par rapport au rayonnement lumineux.

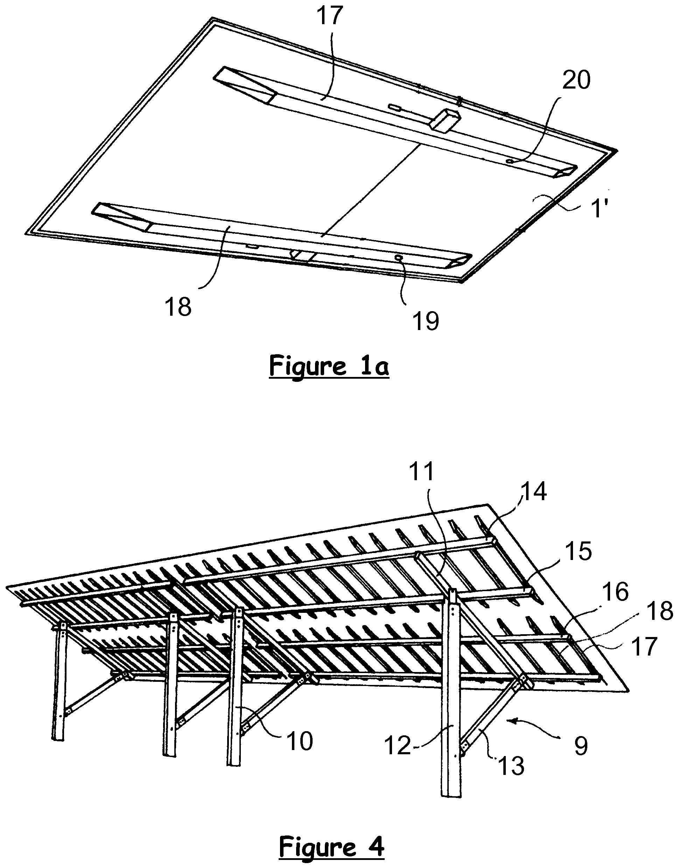

Pour ce faire et on pourra se reporter à la figure 4, le module solaire doit reposer sur un châssis support destiné à être solidarisé en terrasse, en façade d'un immeuble ou plus généralement sur le sol. Ce châssis support 9 comporte d'une part, une première partie 10 liée à la structure porteuse (sol, façade, toit..) et d'autre part, une seconde partie 11 destinée à recevoir la cellule solaire, reposant sur la première partie et généralement inclinée par rapport à l'horizontal de manière à offrir une orientation optimale à l'égard du rayonnement lumineux.

La première partie 10 du châssis visible en figure 4 comprend globalement une pluralité de poutrelles métalliques 11, 12, 13 agencées entre elles de manière à conformer une charpente triangulée obtenue par l'assemblage d'une pluralité de fermes parallèles reliées par des poutres 14, 15, 16 les poutres étant destinées à recevoir une pluralité de modules solaires juxtaposés.

Classiquement ce châssis peut être élaboré à partir de l'assemblage d'une pluralité de profilés métalliques de section standard, solidarisés entre eux par tout procédé de mécano-soudage ou similaire.

Selon un mode préféré de réalisation (se reporter à la figure la), la seconde partie du châssis est constituée par un ensemble de traverses 17, 18 positionnées sur la face inférieure du module solaire (au dos) et orientées parallèlement aux bords de plus grande dimension. Ces profilés de section droite polygonale sont solidarisés à la face inférieure du module solaire par exemple par collage.

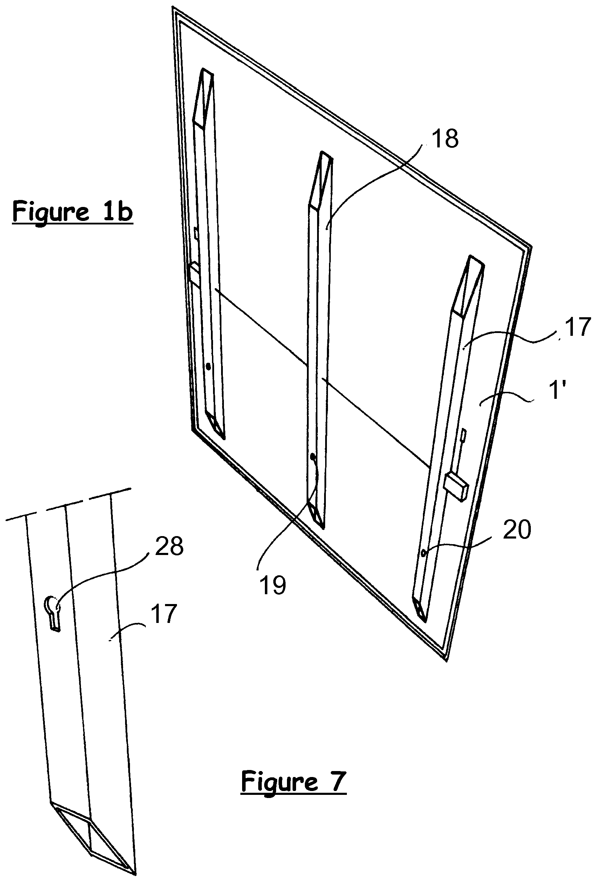

Selon un autre mode de réalisation (se reporter à la figure 1b), si l'élément est orienté selon une direction dite « à l'italienne » ou « landscape », les profilés uniformément répartis sur la face inférieure de l'élément, préférentiellement au nombre d'au moins deux , sont positionnés parallèlement aux bords de petites dimensions.

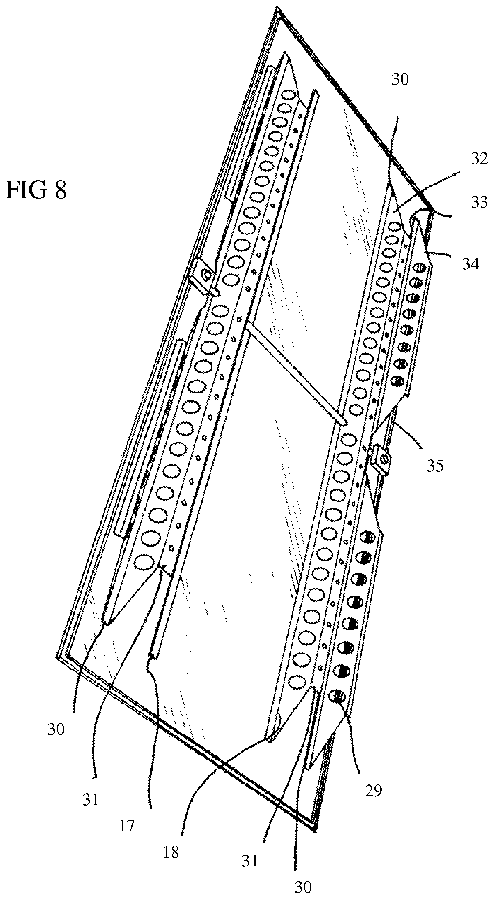

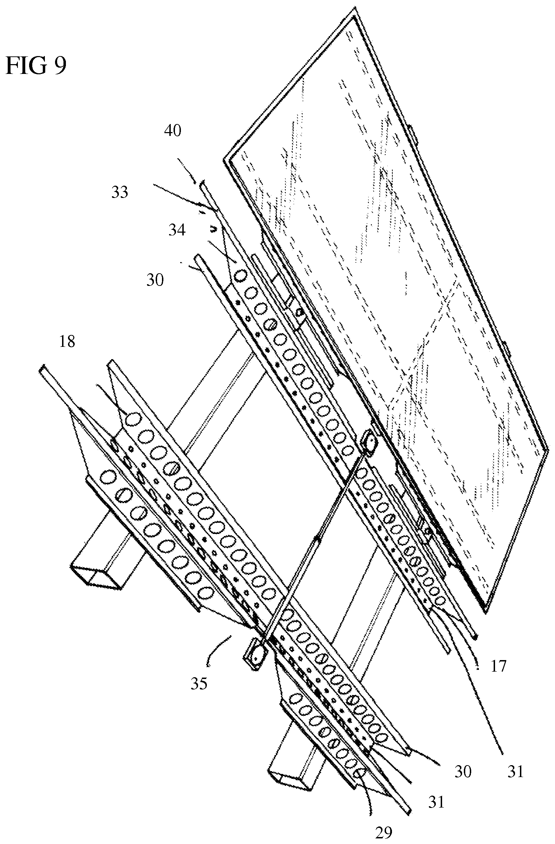

Selon l'invention (se reporter aux figures 8 et 9), le profilé 17, 18 est obtenu par pliage ou emboutissage d'un feuillard métallique, ce feuillard métallique ayant été au préalable poinçonné de manière à former une pluralité de trous 29, les évidements de matières permettant, de manière substantielle, de réduire la masse de la feuille sans pour autant en affecter les propriétés mécaniques. Ce profilé 17, 18 nervuré réalise un profilé à section complexe obtenue par la juxtaposition bord à bord de profilé à section droite simple, notamment en U, en V, à profil convexe et/ou concave.

La section droite du profilé 17, 18 se présente globalement sous la forme de 2 V inversés, les zones de jonction 30, 31 entre les V conformant des parties planes de manière à conformer des zones de contact, soit avec la face arrière du module, soit avec la structure porteuse.

Ainsi le profilé 17, 18 représenté en figures 8 et 9 comporte une première zone plane 30 s'étendant parallèlement à l'un des côtés du module et destinée à former une zone de contact avec la face arrière du module, par exemple par collage. Depuis le bord longitudinal de cette zone plane 30 s'étend en saillie une première aile 32 de la nervure en V, cette aile 32 est pourvue d'une pluralité d'orifices 29 permettant ainsi de l'alléger sans pour autant en affecter ses propriétés mécaniques (résistance à la torsion). Cette aile 32 sensiblement verticale ou oblique, suivant l'ouverture du V, coopère, au niveau de son autre bord longitudinal, avec une autre zone plane 31 coplanaire à la première, et destinée à former une zone de contact avec la structure porteuse (visible en figure 9), cette zone plane 31 peut être évidée (des trous sont visibles en figure 9) pour des problèmes de gain de poids.

Du bord longitudinal de cette deuxième zone plane 31 s'étend en saillie la deuxième aile 33 conformant la nervure en V, de manière similaire à la précédente, cette aile 33 est également pourvue d'une pluralité d'orifices 29, obtenus par poinçonnage de la feuille métallique avant son pliage. Cette deuxième aile 33 constitue en fait une aile commune avec la deuxième nervure en V. Cette deuxième aile 33 se poursuit par une troisième zone plane 30 dont le rôle est identique à la première zone (zone de contact avec la face arrière du module). Depuis le bord longitudinal de cette troisième zone plane 30 s'étend la dernière aile 34 de la nervure en V, cette dernière aile 34 étant comme les précédentes munies d'une pluralité d'orifices 29 pour l'allégement de l'ensemble.

Comme on peut le voir sur les figures 8 et 9, cette dernière aile 34 est munie sensiblement dans sa partie centrale d'une échancrure 35. Cette échancrure 35 crée un évidement de matière ou niveau de l'aile, afin de garantir l'accès aux boîtes de connexion ou de jonction situées en face arrière du module. L'échancrure 35 est obtenue par découpage de la feuille métallique avant son pliage.

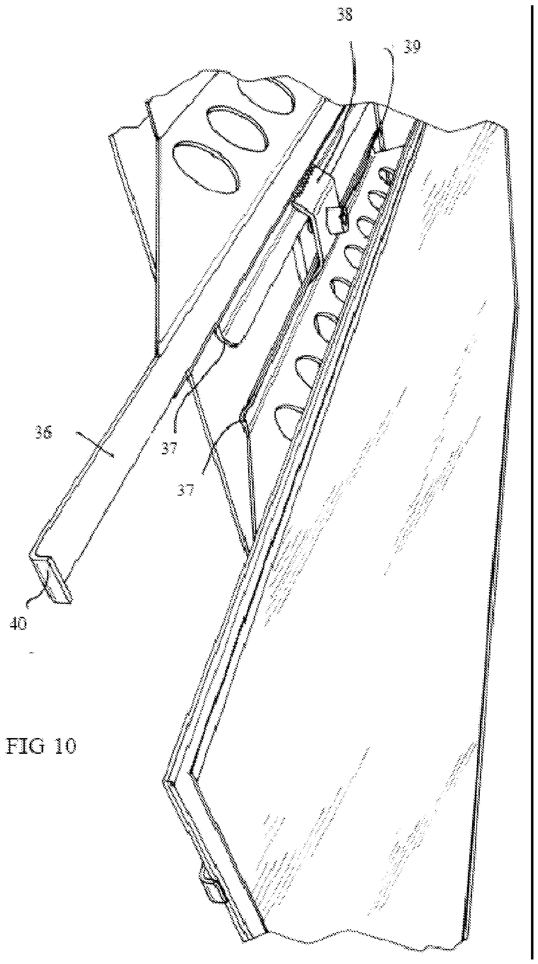

La dernière aile 34 comporte au niveau de son bord longitudinal une zone plane 36 (visible en figure 10) sensiblement dans le même plan que la deuxième zone plane 31 et destinée à conformer une zone de contact avec la structure porteuse.

Elle se distingue cependant par le fait qu'elle comporte un talon 37 permettant le serrage avec une bride 38 et un organe de serrage 39 solidaire de la superstructure ou de la structure porteuse. La bride, lorsqu'elle est desserrée de la structure porteuse, peut aisément se déplacer le long du talon, donnant ainsi quelques degrés de liberté pour l'assemblage des modules à la structure porteuse.

L'assemblage d'un module à la structure porteuse est visible en figure 10.

Selon une caractéristique préférée de l'invention, le profilé nervuré est symétrique et il suffit de procéder à une rotation de ce dernier pour réaliser, comme cela apparaît en figures 8 et 9, le positionnement et l'assemblage au niveau d'une face arrière de module, d'au moins de 2 profilés nervurés à partir d'un modèle unique.

Selon une autre caractéristique préférée de l'invention, l'une au moins des surfaces planes 30, 36 destinées à venir au contact de la face arrière du module photovoltaïque est pourvue d'un dispositif de sécurité 40 qui retient le module si ce dernier se désolidarise du profilé nervuré. Il s'agit de patte venue directement de fabrication lors de l'emboutissage ou rapportée sur l'une au moins desdites surfaces planes. On pourra remarquer que la longueur de ces pattes est adaptée pour correspondre sensiblement à l'une des dimensions spécifiques du module (en l'espèce sur les figures, il s'agit de la longueur) et se termine par une partie recourbée de manière retenir par pincement ledit panneau.

En général, ces dispositifs de sécurité 40 seront utilisés lorsque les panneaux assemblés sur leur structure porteuse, se retrouvent dans une position inclinée et du fait de leur poids propre peut entraîner leur chute.

Dans les exemples représentés sur les figures 8, 9, 10, les profilés 17, 18 nervurés sont métalliques, mais on pourrait concevoir des profilés de profil identique réalisés en matière plastique et obtenus par une technique d'extrusion de matière plastique. Dans ce mode de réalisation en matière plastique, les profilés en plastique ne seraient éventuellement pas ajourés, en tout en partie, le gain de poids étant réalisé par le choix de matière.

Quel que soit le mode de réalisation, les profilés sont disposés parallèlement à l'un des bords du module, de manière à ce que, lorsque le module est assemblé sur la superstructure ou le châssis support, le profilé s'étend verticalement et parallèlement à l'un des côtés, favorisant ainsi les mouvements de convection et donc le refroidissement du module.

Au sens de l'invention « inférieure » est la face du substrat support qui fait face à la structure porteuse ou superstructure.

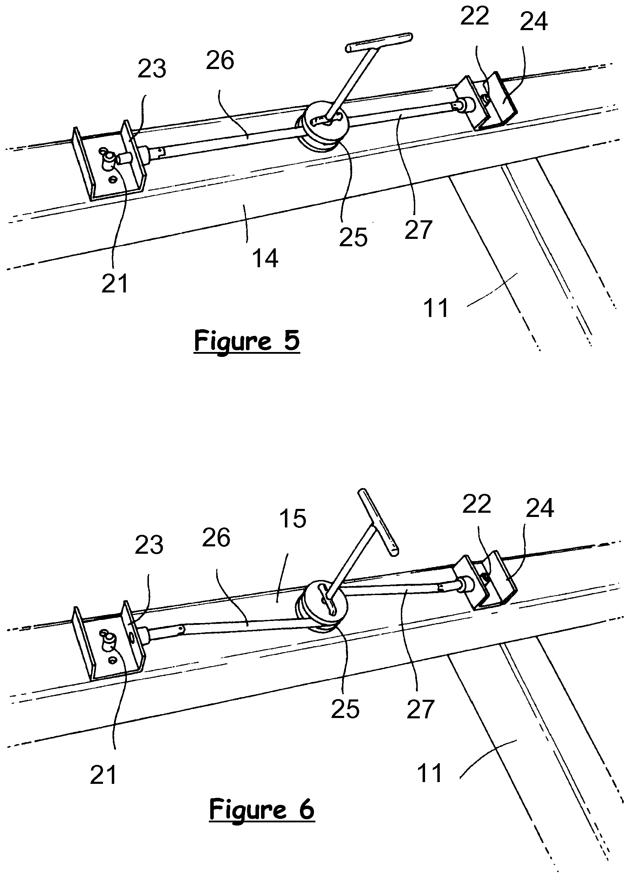

Afin de permettre le maintien en position et dans une configuration spatiale figée des modules sur le châssis, on prévoit de pourvoir chacun des profilés solidaires des modules d'une pluralité d'orifices 19, 20, sur la face devant être en contact du châssis. Chacun de ces orifices 19, 20 est destiné à recevoir un plot de centrage 21, 22 ou téton faisant saillie sur des traverses de la structure porteuse (se reporter en figures 5 et 6). Ainsi chacun des modules, comme cela apparaît en figure la ou 1b, dispose sur sa face inférieure de deux traverses 17, 18 positionnées parallèlement au bord de plus grande dimension, chacune de ces traverses comporte au moins un orifice 19, 20 (de préférence deux) qui coopère avec un téton 21, 22 permettant ainsi à l'aide des deux traverses de positionner dans toutes les directions de l'espace le module sur sa structure porteuse. On remarquera que des portions de fer 23, 24 en U centrées autour de chacun des tétons et dont l'écartement entre les 2 ailes du U sera choisi sensiblement plus grand que l'épaisseur de la traverse et assurera un positionnement optimal et facilitera la pose.

Un dispositif de verrouillage et de déverrouillage des modules sur la structure porteuse et est visible en figures 5, 6. Ce dispositif de verrouillage/déverrouillage 25 s'articule autour d'un système à excentrique qui permet d'actionner deux bras articulés 26, 27, ces bras pouvant occuper une première position dite de verrouillage (se reporter à la figure 5), selon laquelle les bras sont alignés 26, 27 selon un diamètre et chacune de leur extrémité traverse à la fois un premier orifice réalisé dans une portion de fer 23 ou 24 en U et un second orifice en regard réalisé dans une traverse solidaire de la face inférieure (ou dos) du module, et une seconde position dite de déverrouillage (se reporter à la figure 6) selon laquelle les extrémités de chacune des bras 26, 27 ne coopère pas au sein de chacun des orifices pratiqués au niveau des portions de fer 23 ou 24 en U.

Comme cela apparaît en figures 5 et 6, l'excentrique est commandé par une clé. Un mouvement d'un quart de tour dans un sens horaire puis anti horaire permet d'actionner l'extrémité libre des bras du dispositif de verrouillage/déverrouillage d'une manière similaire au pêne d'une serrure.

Selon un autre mode de réalisation du système de verrouillage (cf figure 7), chacun des tétons 21, 22 coopère avec un orifice en forme de trou de serrure 28 pratiqué sur les profilés de la structure porteuse. La restriction de diamètre de cette forme en trou de serrure permet d'assurer le blocage mécanique du module lors du déplacement du téton au sein de ces 2 orifices, lors du mouvement relatif du module par rapport à la structure porteuse.

Afin de faciliter la logistique, la manipulation, le stockage, on prévoit d'agencer les modules en table (se reporter à la figure 4). Chacune des tables est en fait constituer de deux rangées de deux poutres. Chacune des paires de poutres permet de solidariser 2ⁿ (avec n strictement positif) modules juxtaposés bord à bord. Dans l'exemple représenté, la table est donc constituée de 18 modules disposés sur 2 rangées. Cet agencement en table offre de multiples avantages :
- une table correspond en fait sensiblement à la dimension interne des remorques de camion spécialement conçues pour le transport de verre. En variante, la table peut être une dimension correspondant à un sous-multiple de la dimension interne des remorques. Une description de ces remorques de camions ou de ces camions couramment dénommés sous le vocable anglais de « Inloader » est donnée par exemple dans les demandes FR2581603 ou FR2867118.
- Chacune des tables délivre approximativement une unité énergétique (UE) donnée, qui sera facile de comptabiliser et multiplier pour obtenir la puissance désirée
- Il est possible d'utiliser les rotations des « inloader » d'une manière optimale, ces derniers pouvant par exemple apporter à l'unité de fabrication des modules solaires des substrats à fonction verrière de dimensions en PLF (Plateau Largeur Fabrication) ou DLF (Découpé Largeur Fabrication) et repartir, lorsque ces modules sont fabriqués et agencés en table, avec les tables prêtes à être livrées au client final. (Il y a ainsi une gestion optimale des flux de matière et des moyens de transport).

## Revendications

1. Module solaire capable de collecter de la lumière, comprenant un premier substrat (1) à fonction verrière formant un couvercle et un second substrat (1') formant un support, lesdits substrats (1, 1') emprisonnant entre deux couches conductrices (2, 6) formant des électrodes au moins une couche fonctionnelle (7) à base d'un matériau absorbeur permettant une conversion énergétique de la lumière en énergie électrique, le module comprenant en outre au moins deux profilés (17, 18) nervurés solidarisés avec la face inférieure du second substrat (1') et uniformément répartis sur ladite face inférieure, chaque profilé (17, 18) étant orienté parallèlement à l'un des côtés dudit module, chaque profilé (17, 18) ayant une section transversale en forme de deux V inversés à profil convex et/ou concave obtenue par la juxtaposition bord à bord de sections droites simples, ou chaque profilé (17, 18) est obtenu par pliage ou emboutissage d'un feuillard métallique, et chaque profilé (17, 18) comprenant:
une première zone plane (30) s'étendant parallèlement à l'un des côtés du module et destinée à former une zone de contact avec la face inférieure du second substrat (1'),
une première aile (32) s'étendant en saillie du bord longitudinal de la première zone plane (30), cette première aile (32) est pourvue d'une pluralité d'évidements (29) de manière à ne pas affecter ses propriétés mécaniques,
une deuxième zone plane (31) coplanaire à la première zone plane (30) et s'étendant de l'autre bord longitudinal de la première aile (32) et destinée à former une zone de contact avec une structure porteuse,
une deuxième aile (33) s'étendant en saillie du bord longitudinal de la deuxième zone plane (31), cette deuxième aile (33) est pourvue d'une pluralité d'évidements (29) de manière à ne pas affecter ses propriétés mécaniques,
une troisième zone plane (30) coplanaire à la première zone plane (30) et s'étendant de l'autre bord longitudinal de la deuxième aile (33) et destinée à former une zone de contact avec la face inférieure du second substrat (1') une troisième aile (34) s'étendant en saillie du bord longitudinal de la troisième zone plane (30), cette troisième aile (34) est pourvue d'une pluralité d'évidements (29) de manière à ne pas affecter ses propriétés mécaniques et dans sa partie centrale d'une échancrure (35) pour créer un évidement de matière à garantir l'accès aux boîtes de connexion ou de jonction situées en face arrière du module,une quatrième zone plane (36) coplanaire à la deuxième zone plane (31) et s'étendant de l'autre bord longitudinal de la troisième aile (34) et destinée à former une zone de contact avec la structure porteuse, la première aile (32) et la deuxième aile (33) formant un premier V et la deuxième aile (33) et la troisième aile (34) formant un deuxième V, où le deuxième V est inversé relativement au premier V.

2. Module solaire selon la revendication 1, **caractérisé en ce qu'**il est sensiblement de forme polygonale, notamment rectangulaire.

3. Module solaire selon l'une des revendications 1 ou 2, **caractérisé en ce qu'**il comprend, solidarisé avec sa face inférieure, au moins deux profilés (17, 18) orientés parallèlement aux côtés de l'élément situés verticalement lorsque le module est assemblé à la structure porteuse.

4. Module solaire selon l'une quelconque des revendications 1 à 3, **caractérisé en ce qu'**au moins un des profilés (17, 18) comprend un dispositif de sécurité (40) sous la forme d'une patte qui se termine par une partie recourbée adaptée pour retenir l'élément si ce dernier se désolidarise du profilé.

5. Module solaire selon l'une quelconque des revendications 1 à 4, **caractérisé en ce que** chaque profilé (17, 18) comprend, au niveau de l'une des zones de contact (36) avec la structure porteuse un talon (37) apte à être serré, par rapport à la structure porteuse, avec une bride (38) et un organe de serrage (39) solidaire de la structure porteuse.

6. Module solaire selon la revendication 5, **caractérisé en ce que** le talon (37) est apte à être serré, par rapport à la structure porteuse, avec la bride (38) et l'organe de serrage (39), depuis le côté supérieur du module.

7. Module solaire selon l'une quelconque des revendications précédentes, **caractérisé en ce qu'**il comprend un dispositif (25, 26, 27) de verrouillage et de déverrouillage dudit module par rapport à la structure porteuse.

8. Module solaire selon la revendication 7, **caractérisé en ce que** le dispositif de verrouillage comporte un trou de serrure (28).

9. Module solaire selon l'une quelconque des revendications précédentes, **caractérisé en ce que** les profilés (17, 18) comportent au moins un orifice permettant le centrage dudit module sur la structure porteuse.

10. Module solaire selon l'une quelconque des revendications précédentes, **caractérisé en ce que** chaque profilé (17, 18) est assemblé par collage à une portion de surface du second substrat (1').

11. Table adaptée pour être solidarisée à une structure porteuse, comprenant une pluralité de modules solaires juxtaposés selon l'une quelconque des revendications précédentes.

12. Table selon la revendication 11 **caractérisée en ce qu'**elle a un gabarit compatible avec un moyen de transport de type « Inloader ».

## Patentansprüche

1. Solarmodul, geeignet zum Lichtsammeln, mit einem einen Deckel formenden, ersten Substrat (1) mit Glasfunktion und einem einen Träger formenden, zweiten Substrat (1'), wobei die Substrate (1, 1') zwischen zwei Elektrode-formenden, leitfähigen Schichten (2, 6) wenigstens eine Funktionsschicht (7) auf Basis eines Absorbermaterials einschließen, das eine Energiekonversion von Licht in elektrische Energie ermöglicht, wobei das Modul außerdem mindestens zwei gerippte Profile (17, 18) umfasst, die mit der Unterseite des zweiten Substrats (1') verbunden sind, wobei die Profile (17, 18) parallel zu einer der Seiten des Moduls orientiert und auf der Unterseite gleichmäßig verteilt sind, wobei jedes Profil (17, 18) einen Querschnitt in Form von zwei umgekehrten Vs mit konvexem und/oder konkavem Profil hat, erhalten durch stoßweises Nebeneinanderreihen rein gerader Abschnitte, wobei jedes Profil (17, 18) durch Biegen oder Tiefziehen eines Metallbands gefertigt ist, und wobei jedes Profil (17, 18) aufweist:
eine erste ebene Zone (30), die sich parallel zu einer der Seiten des Moduls erstreckt und konfiguriert ist eine Kontaktzone mit der Unterseite des zweiten Substrats (1') zu formen,
einen ersten Arm (32), der sich entlang eines Längsrands der ersten ebenen Zone (30) erstreckt, wobei der erste Arm (32) mit einer Vielzahl von Ausnehmungen (29) versehen ist, derart, dass seine mechanischen Eigenschaften nicht beeinträchtigt sind,
eine zweite ebene Zone (31), die parallel zur ersten ebenen Zone (30) angeordnet ist und sich entlang dem anderen Längsrand des ersten Arms (32) erstreckt und konfiguriert ist eine Kontaktzone mit einer Tragstruktur zu formen,
einen zweiten Arm (33), der sich entlang eines Längsrands der zweiten ebenen Zone (31) erstreckt, wobei der zweite Arm (33) mit einer Vielzahl von Ausnehmungen (29) versehen ist, derart, dass seine mechanischen Eigenschaften nicht beeinträchtigt sind,
eine dritte ebene Zone (30), die parallel zur ersten ebenen Zone (30) angeordnet ist und sich entlang dem anderen Längsrand des zweiten Arms (33) erstreckt und konfiguriert ist eine Kontaktzone mit der Unterseite des zweiten Substrats (1') zu formen,
einen dritten Arm (34), der sich bis entlang des Längsrands der dritten ebenen Zone (30) erstreckt, wobei der dritte Arm (34) versehen ist mit einer Vielzahl von Ausnehmungen (29), derart, dass seine mechanischen Eigenschaften nicht beeinträchtigt sind, und in seinem Zentralabschnitt mit einer Einbuchtung (35) zum Erzeugen einer Materialaussparung, derart, dass Zugang zu Anschluss- oder Verbindungsgehäusen gewährleistet ist, die sich auf der Rückseite des Moduls befinden,
eine vierte ebene Zone (36), die parallel zur zweiten ebenen Zone (31) angeordnet ist und sich entlang dem anderen Längsrand des dritten Arms (34) erstreckt und konfiguriert ist eine Kontaktzone für die Trägerstruktur zu formen, wobei der erste Arm (32) und der zweite Arm (33) ein erstes V formen und der zweite Arm (33) und der dritte Arm (34) ein zweites V formen, wobei das zweite V relativ zum ersten V umgekehrt ist.

2. Solarmodul nach Anspruch 1, **dadurch gekennzeichnet, dass** es im Wesentlichen eine polygonale, insbesondere rechtwinklige, Form hat.

3. Solarmodul nach einem der Ansprüche 1 oder 2, **dadurch gekennzeichnet, dass** es, verbunden mit seiner Unterseite, mindestens zwei Profile (17, 18) aufweist, die so orientiert sind, dass sie parallel zu den vertikal angeordneten Seiten des Elements sind, wenn es mit der Trägerstruktur verbunden ist.

4. Solarmodul nach einem der Ansprüche 1 bis 3, **dadurch gekennzeichnet, dass** wenigstens eines der Profile (17, 18) eine Sicherheitsvorrichtung (40) in Form eines Beins aufweist, das in einem umgebogenen Abschnitt endet, um das Element zurückzuhalten, wenn es sich vom Profil löst.

5. Solarmodul nach einem der Ansprüche 1 bis 4, **dadurch gekennzeichnet, dass** jedes Profil (17, 18), an einer der Kontaktzonen (36) mit der Trägerstruktur, einen Absatz (37) aufweist, der geeignet ist, relativ zur Trägerstruktur mit einer Klemme (38) und einem Klemmorgan (39), das mit der Trägerstruktur verbunden ist, geklemmt zu werden.

6. Solarmodul nach Anspruch 5, **dadurch gekennzeichnet, dass** der Absatz (37) geeignet ist, relativ zur Trägerstruktur mit der Klemme (38) und dem Klemmorgan (39) von der Oberseite des Moduls geklemmt zu werden.

7. Solarmodul nach einem der vorhergehenden Ansprüche, **dadurch gekennzeichnet, dass** es eine Vorrichtung (25, 26, 27) zur Verriegelung des Moduls mit der Trägerstruktur aufweist.

8. Solarmodul nach Anspruch 7, **dadurch gekennzeichnet, dass** die Vorrichtung zur Verriegelung eine Verschlussöffnung (28) aufweist.

9. Solarmodul nach einem der vorhergehenden Ansprüche, **dadurch gekennzeichnet, dass** die Profile (17, 18) wenigstens eine Öffnung aufweisen, welche die Zentrierung des Moduls auf der Trägerstruktur ermöglichen.

10. Solarmodul nach einem der vorhergehenden Ansprüche, **dadurch gekennzeichnet, dass** jedes Profil (17, 18) durch Kleben mit einem Teil der Oberfläche des zweiten Substrats (1') verbunden ist.

11. Tisch, geeignet um mit einer Trägerstruktur verbunden zu werden, der eine Vielzahl von nebeneinander angeordneten Solarmodulen nach einem der vorhergenden Ansprüche aufweist.

12. Tisch nach Anspruch 11, **dadurch gekennzeichnet, dass** er eine Größe hat, die kompatibel mit einem Transportmittel vom Typ "Inloader" ist.

## Claims

1. Solar module capable of collecting light, comprising a first substrate (1) having a glass function and forming a cover and a second substrate (1') forming a support, the substrates (1, 1') sandwiching between two electrode-forming conductive layers (2, 6) at least one functional layer (7) based on an absorber material for converting light energy into electrical energy, the module further comprising at least two ribbed profiles (17, 18) fastened to the lower face of the second substrate (1'), wherein the profiles (17, 18) are oriented parallel to one of the sides of the module and are uniformly distributed on said lower face, wherein each profile (17, 18) has a cross section in the form of two inverted Vs with convex and/or concave form obtained by the edge-to-edge juxtaposition of simple straight sections, wherein each profile (17, 18) is obtained by bending or stamping a metal sheet, and wherein each profile (17, 18) comprises:
a first flat region (30) extending parallel to one of the sides of the module configured to form a contact region for contact with the rear face of the second substrate (1'),
a first arm (32) projecting from a longitudinal edge of the first flat region (30), the first arm (32) being provided with a plurality of orifices (29) without thereby affecting the mechanical properties thereof,
a second flat region (31) parallel to the first flat region (30) projecting from the first arm at its other longitudinal edge configured to form a contact region for contact with a carrier structure,
a second arm (33) projecting from the longitudinal edge of the second flat region (31), the second arm (33) being provided with a plurality of orifices (29) without thereby affecting the mechanical properties thereof,
a third flat region (30) parallel to the first flat region (30) projecting from the second arm (33) at its other longitudinal edge configured to form a contact region for contact with the rear face of the second substrate (1'),
a third arm (34) projecting from the longitudinal edge of the third flat region (30), the third arm (34) being provided with a plurality of orifices (29) without thereby affecting the mechanical properties thereof and in its central part with a notch (35) creating a removal of material so as to ensure access to the connection and junction boxes located on the rear face of the module,
a fourth flat region (36) parallel to the second flat region (31) projecting from the third arm (34) at its other longitudinal edge configured to form a contact region for contact with the carrier structure,
wherein the first arm (32) and the second arm (33) form a first V and the second arm (33) and the third arm (34) form a second V, with the second V being inverted with respect to the first V.

2. Solar module according to claim 1, **characterized in that** it is of substantially polygonal, in particular rectangular, shape.

3. Solar module according to claim 1 or 2, **characterized in that** it comprises, fastened to its lower face, at least two profiles (17, 18) oriented so as to be parallel to the vertically located sides of the element when the element is assembled with the carrier structure.

4. Solar module according to any one of claims 1 through 3, **characterized in that** at least one of the profiles (17, 18) comprises a safety device (40) in the form of a leg terminated by a curved part, to retain the element if the latter is disconnected from the profile.

5. Solar module according to any one of claims 1 through 4, **characterized in that** each profile (17, 18) comprises, at one of the contact regions (36) with the carrier structure, a lug (37) suitable for being clamped relative to the carrier structure, with a clamp (38) and a tightening member (39) connected to the carrier structure.

6. Solar module according to claim 5, **characterized in that** the lug (37) is suitable for being clamped relative to the carrier structure with the clamp (38) and the tightening member (39) from the upper side of the module.

7. Solar module according to any one of the preceding claims, **characterized in that** it comprises a device (25, 26, 27) for locking said module to the carrier structure.

8. Solar module according to claim 7, **characterized in that** the locking device has a keyhole (28).

9. Solar module according to any one of the preceding claims, **characterized in that** each profile (17, 18) includes at least one orifice for centering said module on the carrier structure.

10. Solar module according to one of the preceding claims, **characterized in that** each profile (17, 18) is assembled by adhesive bonding to a surface portion of the second substrate (1').

11. Table, suitable for being fastened to a carrier structure, comprising a plurality of juxtaposed modules elements according to any one of the preceding claims.

12. Table according to claim 11, **characterized in that** it has a size compatible with an "Inloader"-type means of transport.
